# EUROPÄISCHE PATENTSCHRIFT

(11) **EP 0 523 463 B1**
(45) Veröffentlichungstag und Bekanntmachung des Hinweises auf die Patenterteilung: **21.05.1997**
(21) Anmeldenummer: 92111245.4
(22) Anmeldetag: 02.07.1992
(51) Int. Cl.: G01N 27/416, G01N 33/487, C12Q 1/00, C12M 1/40

(54) **Elektrochemisches Analysesystem**
Electrochemical analysis system
Système d'analyse électrochimique

(30) Priorität: 15.07.1991 DE 4123348
(43) Veröffentlichungstag der Anmeldung: 20.01.1993
(73) Patentinhaber: BOEHRINGER MANNHEIM GMBH, 68305 Mannheim (DE)
(72) Erfinder: Dietze, Werner, W-6900 Heidelberg (DE); Haar, Hans-Peter, Dr., W-6908 Wiesloch (DE); Obermeier, Wolfgang, W-6900 Heidelberg (DE)
(74) Vertreter: Pfeifer, Hans-Peter, Dr., Dr. H.-P. Pfeifer Dr. P. Jany, Patentanwälte

(56) Entgegenhaltungen:
- EP-A- 0 136 362
- EP-A- 0 343 405
- EP-A- 0 396 788
- EP-A- 0 417 347
- WO-A-92/01947
- DE-A- 2 127 142
- US-A- 4 225 410
- SENSORS AND ACTUATORS Bd. 15, Nr. 4, Dezember 1988, LAUSANNE CH J.KIMURA ET AL.

## Beschreibung

Die Erfindung betrifft ein elektrochemisches Analysesystem zur analytischen Bestimmung eines Bestandteils einer Probe, insbesondere zur Analyse von Körperflüssigkeiten wie Blut oder Urin. Das System besteht aus disposiblen Analyseelementen, die nach einmaliger Verwendung weggeworfen werden, und einem Auswertegerät.

Die Analyse mit Hilfe disposibler Analyseelemente hat vor allem auf medizinischem Gebiet große Bedeutung erlangt. Im Vergleich zu den früher ausschließlich üblichen Analysemethoden unter Verwendung flüssiger Reagenzien zeichnet sie sich vor allem durch einfache Handhabung aus. Dadurch können auch von wenig geschultem Laborpersonal oder sogar vom Patienten selbst Analysen mit hoher Genauigkeit durchgeführt werden. Die Auswertegeräte sind verhältnismäßig kostengünstig und es ist deshalb möglich, die Analyse "patientennah" in der Praxis des Arztes oder auf der Krankenhausstation durchzuführen.

Die Analyseelemente enthalten Reagenzien, die bei Kontakt mit der Probe zur einer für die Analyse charakteristischen physikalisch nachweisbaren Veränderung führen. Bei den in der Praxis am meisten gebräuchlichen Analyseelementen führt die Reaktion der Reagenzien mit der Probe zu einem Farbumschlag, welcher visuell oder reflexionsphotometrisch nachgewiesen wird.

Daneben gibt es schon seit langem Entwicklungen mit dem Ziel, elektrochemische Analysemethoden, insbesondere die Analyse mit Hilfe von Enzymelektroden, auf Systeme mit disposiblen Analyseelementen zu übertragen. Solche Analyseelemente haben auf einem isolierenden Träger in einem Probenaufgabebereich mindestens einen Sensor mit einer Arbeitselektrode und einer Bezugselektrode. Die Elektroden sind über Verbindungsleitungen mit Anschlußkontakten verbunden, die sich in einem Anschlußbereich des Analyseelementes befinden. An den Anschlußkontakten kann die für die Analyse charakteristische Veränderung einer elektrischen Eigenschaft des Analyseelementes gemessen werden.

Ein Beispiel eines solchen Analyseelementes ist in dem US-Patent 4 225 410 beschrieben. Es hat eine Vielzahl von verschiedenen Sensoren auf einem einzigen isolierenden Träger, um an einer Probe (beispielsweise einem Bluttropfen) gleichzeitig mehrere verschiedene Analysen durchführen zu können.

In diesem Zusammenhang werden verschiedene aus der elektrochemischen Analytik bekannte Meßprinzipien benutzt. Insbesondere unterscheidet man potentiometrische und amperometrische Sensoren. Bei potentiometrischen Sensoren entsteht auf elektrochemischem Wege eine Spannung, die hochohmig an den Anschlußkontakten gemessen werden kann.

Bei amperometrischen Sensoren, für die die vorliegende Erfindung besonders vorteilhaft ist, bildet ein bei einer definierten Spannung fließender Strom die an den Anschlußkontakten meßbare elektrische Eigenschaft.

Die Auswertegeräte solcher Systeme haben einen Analyseelementanschluß mit Kontakten zur elektrischen Verbindung mit den Anschlußkontakten der Analyseelemente und eine Meß- und Auswerteschaltung. Die Meß- und Auswerteschaltung dient dazu, das Meßsignal zu messen und den Meßwert in einen Analysewert umzuwandeln. Für die Umwandlung sind verschiedene Verfahren bekannt, wobei üblicherweise ein Mikroprozessor eingesetzt wird. Die Resultate werden meist auf einem am Auswertegerät befindlichen Display dargestellt. Sie können auch an eine separate Zentraleinheit weitergeleitet und dort angezeigt und/oder registriert werden.

Ein Beispiel einer Meß- und Auswerteschaltung in einem Auswertegerät für disposible, auf elektrochemischen Analysemethoden beruhende Analyseelemente entsprechend dem ersten Teil des Anspruchs 1 ist in dem bereits genannten US-Patent 4,225,410 beschrieben. Um die Signale der unterschiedlichen Sensoren, die verschiedenen detektierten Analyten entsprechen, mit einer einzigen Auswerteschaltung des Auswertegerätes bearbeiten zu können, werden diese Signale mittels einer Umschalteinrichtung nacheinander auf die gemeinsame Auswerteschaltung gelegt und ausgewertet.

Die europäische Patentanmeldung 0417347 offenbart einen aus einer elektrochemischen Zelle, mehreren Elektroden, Schaltungen und Schaltmitteln bestehenden elektrochemischen Detektor, bei dem es durch eine zusätzliche Schaltung ermöglicht wird, zwischen einem eigentlichen Meßmodus und einem Modus zur Bestimmung des Bezugselektrodenpotentials umzuschalten. Auf diese Weise können Meßfehler, die mit Instabilitäten des Referenzelektrodenpotentials zusammenhängen, erkannt werden.

Der Erfindung liegt die Aufgabe zugrunde, ein elektrochemisches Analysesystem zur Verfügung zu stellen, bei dem ein sehr hohes Maß an Zuverlässigkeit und Genauigkeit der Analyse mit verhältnismäßig geringem Aufwand erreicht wird.

Die Aufgabe wird bei einem elektrochemischen Analysesystem der zuvor beschriebenen Art durch die Merkmale des Anspruchs 1 gelöst.

Dadurch werden - wie im folgenden noch näher erläutert wird - vielfältige Kontrollen und Überprüfungen der Systemfunktionen, die sich sowohl auf das Gerät als auch auf das Analyseelement beziehen, möglich. Die damit verbundene erhöhte Sicherheit und Zuverlässigkeit wird mit sehr geringem gerätetechnischem Aufwand erreicht, weil eine elektrische Spannungsquelle sowie eine Spannungs- und eine Strommeßeinrichtung bei den Auswertegeräten elektrochemischer Analysesysteme meist ohnehin erforderlich sind. Zugleich ist es durch die wahlweise Umschaltbarkeit möglich, auch solche Analyseelemente, die mehrere Sensoren für verschiedene Parameter enthalten, mit einem einfachen und kostengünstigen Gerät auszuwerten. Selbst das Vermessen von Sensoren unterschiedlicher Typen (z.B. amperometrische und potentiometrische Sensoren), die auf einem Analyseelement integriert sind, ist möglich.

Die Strommeßeinrichtung und die Spannungsmeßeinrichtung sind vorzugsweise auch zur Bestimmung komplexer Signalanteile - in Verbindung mit der elektrischen Spannungsquelle - eingerichtet. Dadurch lassen sich insbesondere Kapazitäten bestimmen, um zusätzliche Kontrollen zu ermöglichen. Zu diesem Zweck kann eine Wechselstrom-Spannungsquelle (vorzugsweise mit umschaltbarer oder veränderlicher Frequenz) verwendet werden. Bevorzugt ist jedoch eine Lösung, bei der eine digital-elektronische Erfassung komplexer Signale durch Verwendung ausreichend schneller Bauteile ermöglicht wird, die die Bestimmung von Abklingzeiten erlauben.

Um allgemein eine zeitabhängige Messung von Spannungs- und Stromsignalen zu ermöglichen, kann zwischen die Umschalteinrichtung und die Spannungsmeßeinrichtung bzw. zwischen die Umschalteinrichtung und die Strommeßeinrichtung gemäß einer weiteren bevorzugten Ausführungsform jeweils eine Sample und Hold-Schaltung geschaltet. Die Taktung der Meßzeitpunkte von Strommeßeinrichtung und Spannungsmeßeinrichtung ist bevorzugt miteinander synchronisiert. Auch eine Synchronisation mit der Ansteuerung der elektrischen Spannungsquelle sollte möglich sein.

Gemäß einer besonders bevorzugten Ausführungsform hat mindestens eine der Elektroden der zu dem Analysesystem gehörigen Analyseelemente eine zusätzliche Verbindungsleitung zu einem zusätzlichen Anschlußkontakt.

Diese zusätzliche Verbindungsleitung ermöglicht vielfältige Prüf- und Kontrollfunktionen. Sie wird daher als Prüfleitung bezeichnet. Beispielsweise erlaubt sie, auf sehr einfache Weise den Zeitpunkt festzustellen, zu dem ein Analyseelement in das Auswertegerät eingesteckt wird. Außerdem ermöglicht sie meßtechnische Verbesserungen, die zu einer Erhöhung der Meßgenauigkeit führen.

Ein wesentlicher Vorteil der zusätzlichen Prüfleitung ist darin zu sehen, daß die Herstellung der Analyseelemente vereinfacht wird. Bei bekannten Analyseelementen ist ein hoher Aufwand erforderlich, um reproduzierbar niedrige Leitungswiderstände der Verbindungsleitungen zwischen den Elektroden und den Anschlußkontakten sicherzustellen. Die Analyseelemente bestehen üblicherweise aus einer länglichen, flachen Schicht aus isolierendem Kunststoff, auf den die Sensoren, die Verbindungsleitungen und die Kontakte als dünne Bahnen aufgebracht sind. Um die erforderliche Leitungsqualität sicherzustellen, werden vielfach hochwertige Materialien mit aufwendigen Verfahren (z.B. durch Sputtern oder Siebdruck) aufgebracht. Bei einem kommerziell erhältlichen elektrochemischen Analyseelement wird beispielsweise für die Leiterbahnen ein doppelschichtiger Aufbau gewählt, bei dem eine Schicht aus Silber-Paladium über einer Graphitschicht aufgetragen ist. Durch derartige Maßnahmen sollen insbesondere Haarrisse verhindert werden, die die Analyse wesentlich verfälschen könnten, ohne daß dies bei den bekannten Verfahren mit ausreichender Sicherheit feststellbar wäre. Derartiger produktionstechnischer Aufwand kann durch die Erfindung reduziert werden.

Demgegenüber ermöglicht die Verwendung der zusätzlichen Prüfleitung - wie im folgenden noch näher erläutert wird - einerseits mit einfachen Mitteln eine zusätzliche Kontrolle des Analyseelementes mit dem Auswertegerät und andererseits eine verbesserte Meßtechnik, die weniger von den Leitungswiderständen der Verbindungsleitungen abhängig ist.

Bekannte Sensoren arbeiten teilweise mit nur zwei Elektroden (Arbeitselektrode und Bezugselektrode), teilweise mit drei Elektroden (Arbeitselektrode, Bezugselektrode und Hilfselektrode). Insbesondere bei Analyseelementen mit zwei Elektroden ist vorzugsweise sowohl die Arbeitselektrode als auch die Bezugselektrode mit einer zusätzlichen Prüfleitung versehen. Bei Sensoren mit drei Elektroden ist es im Regelfall ausreichend, wenn nur die Arbeitselektrode eine zusätzliche Prüfleitung aufweist.

Die Erfindung ist von besonderem Vorteil in Verbindung mit Analyseelementen, bei denen der Träger eine flache Tragschicht aus isolierendem Material ist, auf welchem die Verbindungsleitungen (vorzugsweise auch die Elektroden und die Anschlußkontakte) als Leiterbahnen in Form einer dünnen leitenden Schicht ausgebildet sind. Derartige Analyseelemente sind beispielsweise in der EP-A-136 362 und in der DE-A-21 27 142 beschrieben. Aufgrund der vorliegenden Erfindung können die Leiterbahnen solcher Analyseelemente extrem schmal sein. Dies führt zu einer Materialersparnis und erlaubt eine kompakte Bauweise. Die Leiterbahnen können insbesondere aus durch Vakuumbedampfen, Sputtern oder eine Drucktechnik aufgebrachten Metallschichten bestehen. Besonders bevorzugt bestehen sie aus Graphit, welches beispielsweise im Siebdruckverfahren aufgebracht sein kann.

Die Erfindung wird im folgenden anhand eines in den Figuren schematisch dargestellten Ausführungsbeispiels näher erläutert; es zeigen:
- Fig. 1: Ein erfindungsgemäßes Analysesystem in perspektivischer Darstellung;
- Fig. 2: eine Aufsicht auf ein bevorzugtes Analyseelement;
- Fig. 3: ein Blockschaltbild eines Analysesystems;
- Fig. 4: eine vergrößerte Ausschnittsdarstellung aus Fig.3;
- Fig. 5 und Fig. 6: einen Direktsteckverbinder eines Analysesystems in Aufsicht und im Schnitt.

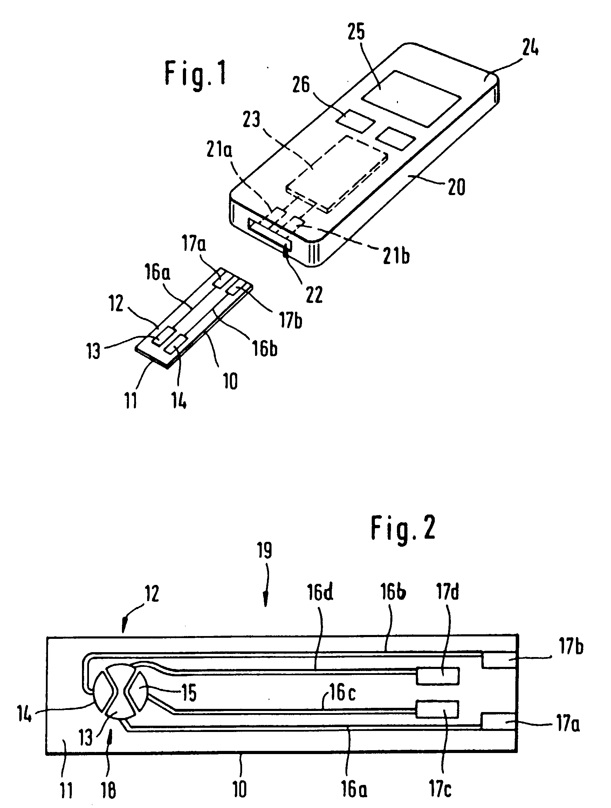

Das in Figur 1 gezeigte Analysesystem besteht aus Analyseelementen 10 (von denen nur eines dargestellt ist) und einem Auswertegerät 20. Auf dem Analyseelement 10 erkennt man auf eine isolierenden Tragschicht 11 aus Kunststoff in einem Probenaufgabebereich 12 einen Sensor 18. Er weist eine Arbeitselektrode 13 und eine Bezugselektrode 14 auf. Die Elektroden 13, 14 sind über Verbindungsleitungen 16a, 16b mit einem Anschlußbereich 19 verbunden, in dem sich Anschlußkontakte 17a,17b des Analyseelementes ("Elementkontakte") befinden, über die die elektrische Verbindung zu entsprechenden Kontakten 21a,21b des Auswertegerätes 20 ("Gerätekontakte") hergestellt wird.

Die Gerätekontakte 21 befinden sich in einem Analyseelementanschluß 22. Sie sind mit einer Meß- und Auswerteschaltung 23 im Gehäuse 24 des Auswertegerätes 20 verbunden. Die Meßergebnisse und eventuelle Kontrollmeldungen werden über ein Display 25 angezeigt. Zur Eingabe von Befehlen und Einstellungen sind Tasten 26 vorgesehen.

Das in Figur 2 dargestellte Analyseelement 10 hat in seinem Probenaufgabebereich 12 einen Sensor 18, der neben einer Arbeitselektrode 13 und einer Bezugselektrode 14 eine Hilfselektrode 15 aufweist. Die Arbeitselektrode 13 ist zwischen der Bezugselektrode 14 und der Hilfselektrode 15 angeordnet. Material und Aufbau der Elektroden sind konventionell. Die aktive Oberfläche der Arbeitselektrode 13 kann beispielsweise ein Enzym und einen Mediator aufweisen. Die Bezugselektrode 14 und die Hilfselektrode 15 bestehen bevorzugt aus dem gleichen Material (zum Beispiel Silber/Silberchlorid) und haben gleichgroße aktive Flächen in dem Probenaufgabebereich 12. Die Elektroden 13, 14 und 15 sind über insgesamt vier Verbindungsleitungen 16a bis 16d mit Elementkontakten 17a bis 17d verbunden. Diese sind zweckmäßigerweise - wie dargestellt - in Längsrichtung des Analyseelementes 10 gegeneinander versetzt, um eine kostengünstige schmale Bauweise des Analyseelementes bei trotzdem ausreichender Breite der Kontaktflächen zu ermöglichen. Im dargestellten bevorzugten Fall sind zwei der Kontakte 17a und 17d über getrennte Verbindungsleitungen 16a, 16d mit der Arbeitselektrode 13 verbunden.

Es können auch mehrere Arbeitselektroden (insbesondere zur Analyse verschiedener Bestandteile der Probe) vorgesehen sein, die vorzugsweise gemeinsam zwischen einer Bezugselektrode und einer Hilfselektrode angeordnet sind und jeweils zwei getrennte Verbindungsleitungen zu jeweils zwei Elementkontakten aufweisen.

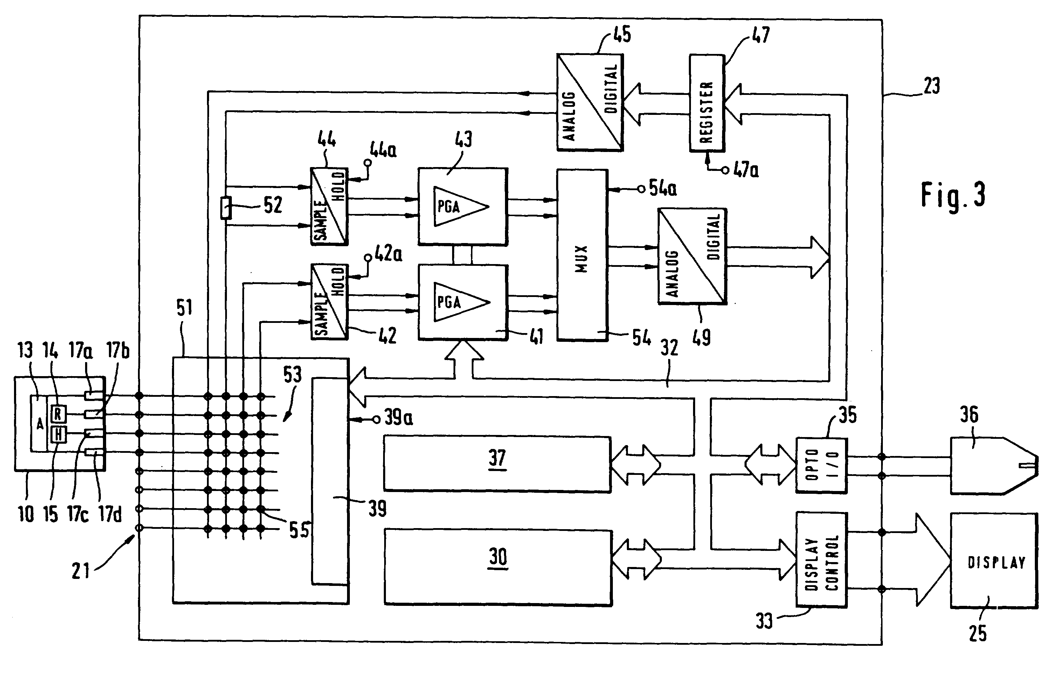

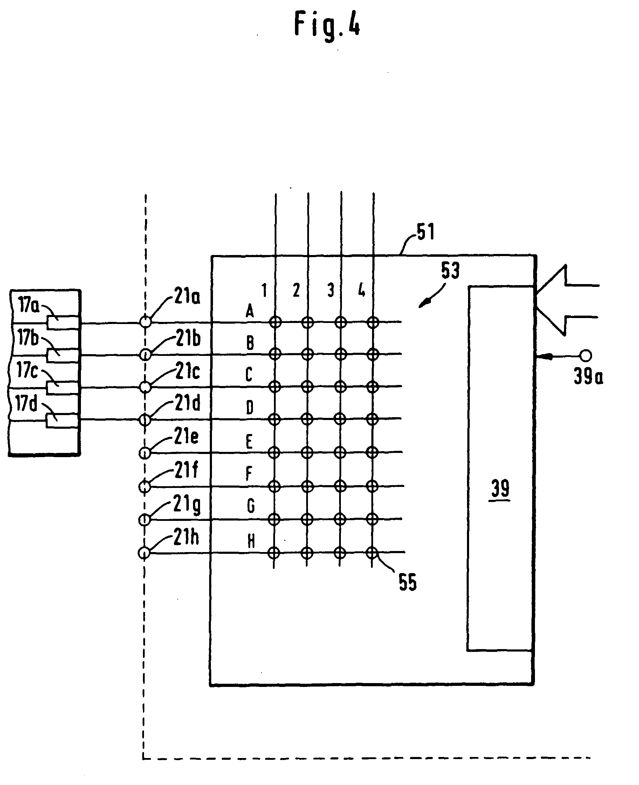

In Figur 3 und 4 erkennt man stark schematisiert ein Analyseelement 10 des in Figur 2 dargestellten Typs, welches an die Meß- und Auswerteschaltung 23 eines entsprechenden Auswertegerätes angeschlossen ist.

Die Meß- und Auswerteschaltung 23 ist mit einem Mikroprozessor digitaltechnisch realisiert. Eine Meß- und Steuereinheit 30 dient zur Benutzerführung, Ablaufsteuerung und Meßwertverarbeitung. Sie ist über einen Datenbus 32 verbunden mit einer Displayansteuerung 33, einem optoelektronischen Ein/Ausgang 35, einem Kalibrationswertspeicher 37, einer Schaltmatrixkontrollogik 39, zwei Verstärkern mit programmierbarem Verstärkungsfaktor (Programmable Gain Amplifier, PGA) 41 und 43 und (über ein Register 47) mit einer elektrischen Spannungsquelle 45, deren Ausgangsspannung digital einstellbar ist. Die Displaykontrollschaltung 33 steuert das Display 25 an. Der optoelektronische Ein/Ausgang 35 kann zum Beispiel zum Anschluß einer Photosender/-empfängereinheit 36 als Lichtschranke, optische Datenschnittstelle oder Barcodeleser dienen. Vorzugsweise ist die gesamte Meß- und Auswerteschaltung, zumindest aber die Schalteinrichtung 51, die Spannungsmeßeinrichtung 41,49 und die Strommeßeinrichtung 52,43,49 monolytisch auf einem Halbleiter integriert.

Der PGA-Verstärker 41 bildet zusammen mit einem Analog-Digitalwandler 49 eine Spannungsmeßeinrichtung. Die Spannungsmeßeinrichtung 41,49 ist mittels einer Umschalteinrichtung 51 wahlweise und in beliebiger Polung an ein Paar der Gerätekontakte 21a-21d anschließbar, an die das Analyseelement 10 angeschlossen ist. Auch die Spannungsquelle 45 kann über die Umschalteinrichtung 51 wahlweise mit jedem Paar der Gerätekontakte 21a-21d und somit jedem der Elementkontakte 17a-17d in beliebiger Polung verbunden werden. Der von der Spannungsquelle 45 in die Umschalteinrichtung 51 fließende Strom ist über einen in Reihe geschalteten Meßwiderstand 52 meßbar. Der Spannungsabfall an dem Widerstand 52 liegt an einem zweiten PGA-Verstärker 43 an, dessen Ausgangssignal über einen Multiplexer 54 wechselweise mit dem gleichen A/D-Wandler 49 wie der erste PGA-Verstärker 41 verbunden werden kann. Die Verwendung eines gemeinsamen A/D-Wandlers für die Spannungsmeßeinrichtung 41,49 und die Strommeßeinrichtung 52,43,49 reduziert den konstruktiven Aufwand und eliminiert Fehlerquellen. Den PGA-Verstärker 41,43 ist jeweils eine Sample und Hold-Schaltung 42,44 mit einem Takteingang 42a bzw. 44a vorgeschaltet.

Die Umschalteinrichtung 51 (Fig. 4) weist zweckmäßigerweise ein Schaltmatrix 53 auf, welche vier Spalten 1 bis 4 zum Anschluß der elektrischen Spannungsquelle 45 und der Spannungsmeßeinrichtung 41, 49 hat. Die Anzahl der Reihen entspricht der Anzahl der Kontakte des Analyseelementes. Dargestellt sind vier Reihen A-D zum Anschluß der vier Gerätekontakte 21a bis 21d.

Wenn das Analyseelement eine geringere oder größere Anzahl von Kontakten hat, hat die Schaltmatrix zweckmäßigerweise eine ebenso große Anzahl von Schalterreihen. In Figur 3 sind beispielsweise acht Schalterreihen A bis H dargestellt, so daß bis zu acht Gerätekontakte 21a-21h und folglich Elementkontakte entsprechender Analyseelemente wahlweise und in beliebiger Polung sowohl mit der Spannungsquelle 45 als auch mit der Spannungsmeßeinrichtung 41,49 verbunden werden können, wenn die entsprechenden Schaltknoten 55 der Schaltmatrix 53 geschlossen werden.

Selbstverständlich kann die Schaltmatrix eine größere Anzahl von Spalten haben, um beispielsweise weitere Meßeinrichtungen an das Analyseelemente anschließen zu können. Umgekehrt muß eine Umschalteinrichtung 51 im Sinne der vorliegenden Erfindung nicht notwendigerweise als vollständige Schaltmatrix in dem Sinne ausgebildet sein, daß jeder Kontakt in jeder Polung sowohl an die elektrische Spannungsquelle 45 als auch die Spannungsmeßeinrichtung 41,49 angeschlossen werden kann. Es ist ausreichend, wenn die Umschalteinrichtung die erforderlichen Schalter aufweist, um die jeweils gewünschte Kontrollfunktion zu ermöglichen. Eine vollständige Schaltmatrix ist jedoch bevorzugt, da damit eine optimale Überprüfung des Sensors vor und während der Messung erfolgen kann.

Die Ansteuerung der Schaltknoten 55 der Schaltmatrix 53 erfolgt mittels der Schaltmatrixkontrollogik 39, die über einen Takteingang 39a getaktet werden kann und Bestandteil der Umschalteinrichtung 51 ist.

Die Funktion des in Figur 3 dargestellten Systems wird nachfolgend in verschiedenen Betriebszuständen erläutert. Dabei werden jeweils die geschlossenen Schaltknoten der Schaltmatrix 53 durch Angabe der entsprechenden Nummer der Spalte bzw. des Buchstabens der Reihe definiert.

Im ersten Betriebszustand ist das Analyseelement 10 noch nicht an die Gerätekontakte 21 angeschlossen. In diesem Zustand wird die Funktion des Gerätes geprüft. Insbesondere wird kontrolliert, ob, beispielsweise durch Verunreinigungen, ein (partieller) Kurzschluß zwischen den Gerätekontakten 21a bis 21d aufgetreten ist. Um diese Prüfung beispielsweise für die Kontakte 21a und 21b vorzunehmen, werden die Schaltknoten A1 und B2 (oder B1 und A2) geschlossen. Bei definierter Spannung der Spannungsquelle 45 ergibt der von der Strommeßeinrichtung 52,43,49 gemessene Stromfluß ein Maß für den Widerstand zwischen den Kontakten, der von der Meß- und Steuereinheit 30, welche in diesem Fall als Diskriminatoreinrichtung dient, mit einem Grenzwert verglichen wird, welcher in dem Kalibrationswertspeicher 37 abgespeichert ist. Wenn der gemessene Widerstandswert den Grenzwert unterschreitet, wird ein Fehlersignal angezeigt und das Gerät in einen Störungszustand geschaltet, in dem keine Messung möglich ist.

Diese Prüfung kann nacheinander mit allen Kontakten 21a bis 21d durchgeführt werden.

Im nächsten Betriebszustand wird der Anschluß des Analyseelementes 10 detektiert. Zu diesem Zweck werden die Schaltknoten A1 und D2 (oder D1 und A2) geschlossen. Wenn der Kontakt zwischen den Elementkontakten 17 und den Gerätekontakten 21 geschlossen wird, fließt ein Strom, der über die Strommeßeinrichtung 52,43,49 festgestellt wird. Diese Funktionsweise wird durch die an mindestens einer Elektrode (hier der Arbeitselektrode 13) angeschlossene zweite Verbindungsleitung 16d ermöglicht. Die Detektion des Analyseelementes kann konventionell beispielsweise mit Hilfe eines Mikroschalters realisiert werden. Erfindungsgemäß ist sie mit vermindertem Aufwand möglich.

Nach dem Anschließen des Analyseelementes 10 wird in dem gleichen Betriebszustand der Widerstand zwischen den Kontakten 17a und 17d in analoger Weise wie bei dem ersten Betriebszustand bestimmt. In diesem Fall erfolgt ein Vergleich mit einem Grenzwert, der dem Widerstand intakter Verbindungsleitungen 16a, 16d zu der Arbeitselektrode 13 entspricht. Falls sich in diesen Verbindungsleitungen Haarrisse befinden, ist der Widerstand erhöht. Liegt der gemessene Widerstand über dem definierten Grenzwert, erfolgt eine Fehleranzeige, daß das Analyseelement 10 defekt ist.

In einem dritten Betriebszustand erfolgt eine Kurzschlußprüfung des Analyseelementes. Um beispielsweise zu prüfen, ob die erforderliche elektrische Isolation zwischen der Arbeitselektrode 13 und der Hilfselektrode 15 gegeben ist, werden die Schaltknoten C1 und D2 (oder D1 und C2) geschlossen. Wiederum erfolgt eine Widerstandsmessung und Vergleich mit einem Grenzwert, wobei ein Fehlersignal bei Unterschreitung des Grenzwertes erzeugt wird.

Ein vierter Betriebszustand dient dazu, die Benetzung der Elektroden 13,14 und 15 mit der Probe festzustellen und - in einer bevorzugten Ausführungsform - die Vollständigkeit der Benetzung zu kontrollieren.

Zur Feststellung der Benetzung werden die Schaltknoten derartig geschlossen, daß eine Widerstandsmessung zwischen zwei der Elektroden erfolgt. Dies können beispielsweise die Referenzelektrode 14 und die Hilfselektrode 15 sein, wobei die Schaltknoten B1 und C2 (oder C1 und B2) geschlossen werden. Die Benetzung der Elektroden führt zu einem Abfall des Widerstandes, der wie bei den vorhergehenden Betriebszuständen festgestellt werden kann. In dieser Stellung der Schaltmatrix 53 kann zugleich der Widerstand der zu der Referenzelektrode 14 und der Hilfselektrode 15 führenden Verbindungsleitungen 16b und 16c und damit der ordnungsgemäße Zustand dieser Verbindungsleitungen geprüft werden.

Die Genauigkeit der Analyse ist bei einer amperometrischen Bestimmung davon abhängig, daß die aktive Oberfläche der Arbeitselektrode 13 vollständig benetzt ist. Eine Kontrolle ist gemäß einer bevorzugten Ausführungsform durch eine Kapazitätsmessung (also die Messung eines komplexen Widerstandes) möglich. Hierzu wird die Spannungsquelle 45 durch Schließen der Schaltknoten A1 und B2 (oder B1 und A2) zwischen die Arbeitselektrode 13 und die Bezugselektrode 14 geschaltet. Die Spannung wird stromlos zwischen der Hilfselektrode 15 und der Arbeitselektrode 13 gemessen, wozu die Schaltknoten C3 und D4 (oder C4 und D3) geschlossen werden.

Die Messung der Kapazität erfordert eine zeitlich aufgelöste Strom-Spannungsmessung. Hierzu kann die Spannungsquelle 45 als Wechselspannungsquelle ausgebildet sein, deren Frequenz vorzugsweise einstellbar ist. Besonders bevorzugt erfolgt die Messung eines komplexen Widerstandes jedoch dadurch, daß verhältnismäßig schnelle elektronische Bauelemente verwendet werden und die Spannungs- und Stromsignale (durch Ansteuerung der Takteingänge 39a, 42a, 44a, 54a und 47a) synchronisiert meßbar beziehungsweise ansteuerbar sind. Dadurch ist es möglich, den Relaxationsvorgang beim Einschalten oder Ausschalten der Spannungsquelle 45 zeitlich zu verfolgen und dadurch die Kapazität zwischen der Arbeitselektrode und der Hilfselektrode zu bestimmen, welche ein Maß für die Benetzung der Arbeitselektrode ist.

In diesem Zusammenhang ist es wiederum hilfreich, daß die Arbeitselektrode 13 zwei Verbindungsleitungen 16a,16d zu der Meß- und Auswerteschaltung 23 aufweist. Dadurch ist es möglich, die Spannung zwischen der Hilfselektrode 15 und der Arbeitselektrode 13 stromlos und damit unbeeinflußt von den Leitungswiderständen mit Hilfe der Leitung 16d zu messen, währen die Leitung 16a zur Stromzuführung dient.

Bei der Benetzungskontrolle kann die Funktion der Hilfselektrode 15 und der Bezugselektrode 14 sowie der beiden Verbindungsleitungen 16a und 16d selbstverständlich ausgetauscht werden. Bevorzugt wird die Widerstands- bzw. Kapazitätsmessung doppelt durchgeführt, wobei bei der zweiten Messung die Spannungsquelle 45 zwischen die Arbeitselektrode 13 und die Hilfselektrode 15 geschaltet und die Spannung stromlos zwischen der Bezugselektrode 14 und der Arbeitselektrode 13 gemessen wird.

In einem fünften Betriebszustand erfolgt die elektrochemische Messung. Hierbei wird die Spannungsquelle durch Schließen der Schaltknoten C1 und D2 (oder C2 und D1) zwischen die Hilfselektrode und die Arbeitselektrode geschaltet. Die Spannung wird zwischen der Referenzelektrode und der Arbeitselektrode gemessen, wozu die Schaltknoten A3 und B4 (oder A4 und B3) geschlossen werden. Wie bei der Messung amperometrischer Sensoren mit drei Elektroden üblich, wird die Ausgangsspannung der Spannungsquelle 45 so geregelt, daß die Spannung zwischen der Referenzelektrode 14 und der Arbeitselektrode 13 einen gewünschten Sollwert hat. Der dabei zwischen der Hilfselektrode und der Arbeitselektrode fließende Strom ist ein Maß für die Analyse. Auch in diesem Zusammenhang ist die zusätzliche Verbindungsleitung an der Arbeitselektrode hilfreich. Wäre sie nicht vorhanden, so müßte der gleiche Kontakt der Arbeitselektrode sowohl für die Stromzuführung als auch für die Spannungsmessung verwendet werden. Die Spannungsmessung würde durch den Spannungsabfall am Widerstand der Verbindungsleitung 16a verfälscht. Durch die zusätzliche Verbindungsleitung 16d ist es möglich, die Spannung stromlos zu messen. Der Widerstand der Verbindungsleitungen 16a bis 16d ist damit ohne Einfluß auf das Meßergebnis.

Wie erwähnt, sind die Arbeitselektrode 14 und die Hilfselektrode 15 vorzugsweise identisch ausgebildet. Dadurch ist eine weitere optionale Kontrollfunktion möglich, bei der die Spannung zwischen der Referenzelektrode und der Hilfselektrode durch Schließen der Schaltknoten B3 und C4 (oder B4 und C3) nach Benetzen mit der Probe gemessen wird. Die gemessene Spannung muß bei ordnungsgemäßem elektrochemischem Zustand der Elektroden praktisch gleich Null sein.

Die vorstehenden Kontrollfunktionen beschreiben einige wesentliche Beispiele und einige wesentliche Varianten, in der die Umschalteinrichtung 51 verwendet werden kann. Dem Fachmann sind auf Basis der vorstehenden Beschreibung jedoch zahlreiche Alternativen geläufig, mit denen die gleichen und gegebenenfalls weitere Kontroll- Überprüfungs- und Meßfunktionen mit geringem gerätetechnischen Aufwand realisiert werden können.

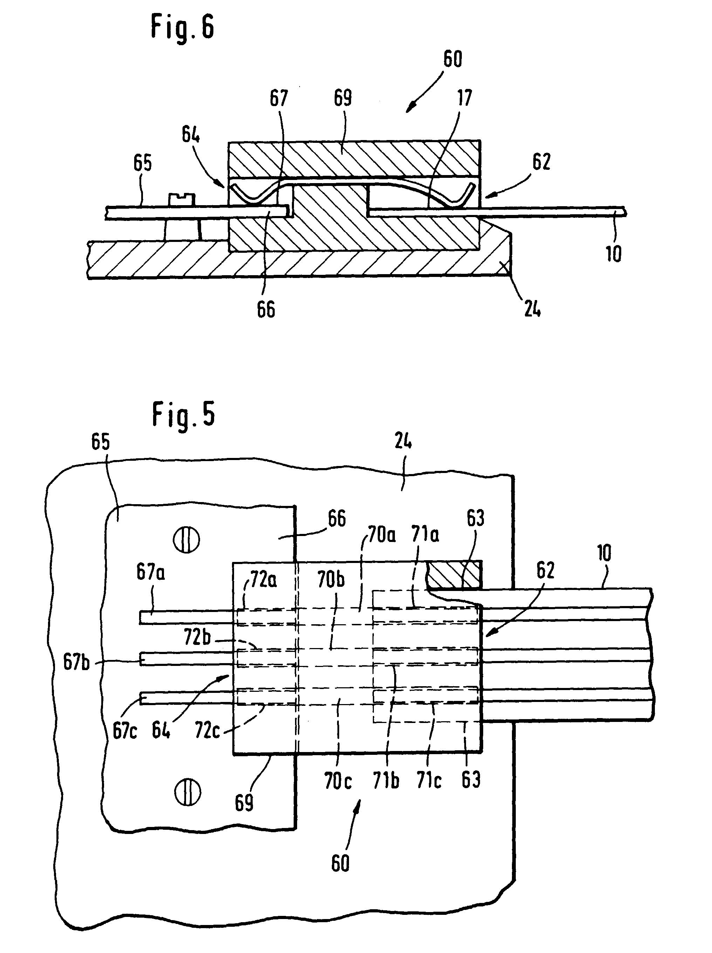

Die Figuren 5 und 6 zeigen eine Gestaltung des Analyseelementanschluß 22, die besonders bevorzugt in Verbindung mit dem zuvor beschriebenen Analysesystem eingesetzt wird, jedoch auch selbständige Bedeutung hat.

Ein Direktsteckverbinder 60 weist zwei Steckbereiche 62,64 auf, wobei der erste Steckbereich 62 zum Anschluß des Analyseelementes 10 und der zweite Steckbereich 64 zum Anschluß der Meß- und Auswerteschaltung dient. Eine Leiterplatte 65, die die in der Figur nicht dargestellte Meß- und Auswerteschaltung trägt, weist eine Steckleiste 66 mit Steckkontakten 67 auf, die in den zweiten Steckbereich 64 eindringt.

Die Steckbereiche 62,64 werden durch Ausnehmungen in einem vorzugsweise einteiligen Gehäuse 69 gebildet. Sie sind durch einteilige Kontaktfederteile 70a miteinander verbunden, welche jeweils außenseitige Kontaktfedern 71a-71c zum Kontaktieren der Anschlußkontakte 17a-17c des Analyseelementes und innenseitige Kontaktfedern 72a-72c zum Kontaktieren der Steckkontakte 67 der Leiterplatte 66 aufweisen.

Der Durchsteckverbinder 60 ist mechanisch stabil mit dem Gehäuse 24 des Auswertegerätes 20 verbunden. Das Analyseelement 10 wird durch die Seitenwände 63 des ersten Steckbereiches 62 beim Einstecken seitlich geführt.

Diese Konstruktion ermöglicht einen mechanischen Toleranzausgleich (Wärmedehnungs- und Maßtoleranz) zwischen Leiterplatte 65 und Gehäuse 24, ohne daß die Kontaktierung gefährdet wird. Dadurch wird eine mechanische Belastung vermieden. Die Konstruktion ist außerordentlich einfach und kostengünstig in der Herstellung. Insoweit ist sie vorbekannten Problemlösungen, bei denen ein zusätzlicher Zwischenstecker oder Lötverbindungen verwendet wurden, überlegen.

## Patentansprüche

1. Elektrochemisches Analysesystem zur analytischen Bestimmung eines Bestandteils einer Probe, umfassend disposible Analyseelemente (10), welche auf einem isolierenden Träger (11) in einem Probenaufgabebereich (12) mindestens einen Sensor (18) mit einer Arbeitselektrode (13) und einer Bezugselektrode (14) und in einem Anschlußbereich (19) Elementkontakte (17) aufweisen, wobei zwischen den Elektroden (13,14) und den Elementkontakten (17) Verbindungsleitungen (16) verlaufen und die an den Elementkontakten (17) meßbaren elektrischen Eigenschaften der Analyseelemente (10) sich bei Kontakt mit der Probe in einer für die Analyse charakteristischen Weise ändern, und ein Auswertegerät (20) mit einer elektrischen Spannungsquelle (45), einer Strommeßeinrichtung (52,49), einer Spannungsmeßeinrichtung (41,49) sowie einem Analyseelementanschluß (22) mit Gerätekontakten (21) zur elektrischen Verbindung mit den Elementkontakten (17) der Analyseelemente und einer eine Umschalteinrichtung (51) enthaltenden Meß- und Auswerteschaltung (23) zur Messung der für die Analyse charakteristischen elektrischen Veränderung und Umwandlung des Meßwertes in einen Analysewert,
**dadurch gekennzeichnet**, daß
an die Umschalteinrichtung (51) einerseits die elektrische Spannungsquelle (45) mit der Strommeßeinrichtung (52,49) und die Spannungsmeßeinrichtung (41,49) und andererseits die Gerätekontakte (21) des Analyseelementanschlusses (22) derartig angeschlossen sind, daß die elektrische Spannungsquelle (45) mit der Strommeßeinrichtung (52,49) und die Spannungsmeßeinrichtung (41,49) mittels der Umschalteinrichtung (51) wahlweise an unterschiedliche Paare von Gerätekontakten (21) des Analyseelementanschlusses (22) anschließbar sind, um vielfältige Kontrollen und Überprüfungen der Systemfunktionen, die sich sowohl auf das Gerät als auch auf das Analyseelement beziehen, zu ermöglichen.

2. Analysesystem nach Anspruch 1, **dadurch gekennzeichnet**, daß die Umschalteinrichtung (51) eine Schaltmatrix (53) aufweist.

3. Analysesystem nach Anspruch 1 oder 2, **dadurch gekennzeichnet,** daß die Umschalteinrichtung (51), die Spannungsmeßeinrichtung (41,49) und die Spannungsquelle (45) gemeinsam monolytisch integriert sind.

4. Analysesystem nach einem der vorhergehenden Ansprüche, **dadurch gekennzeichnet**, daß die Spannung der Spannungsquelle (45) und das Meßsignal der Strommeßeinrichtung (52,43,49) zur Bestimmung eines elektrischen Widerstandes auswertbar sind und daß eine Diskriminatoreinrichtung zur Erzeugung eines Fehlersignals bei Überschreitung und/oder Unterschreitung eines vorbestimmten Widerstandsgrenzwertes vorgesehen ist.

5. Analysesystem nach einem der vorhergehenden Ansprüche, **dadurch gekennzeichnet**, daß die Meß- und Auswerteschaltung (23) eine Mikroprozessor-gesteuerte digitale Signalverarbeitungseinrichtung aufweist, die Strommeßeinrichtung (52,43,49) und die Spannungsmeßeinrichtung (41,49) digitale Ausgangssignale erzeugen und die elektrische Spannungsquelle (45) und die Umschalteinrichtung digital ansteuerbar sind.

6. Analysesystem nach einem der vorhergehenden Ansprüche, **dadurch gekennzeichnet,** daß die Spannungsmeßeinrichtung (41,49) und die Strommeßeinrichtung (52,43,49) zur Bestimmung komplexer Signalanteile eingerichtet sind.

7. Analysesystem nach einem der vorhergehenden Ansprüche, **dadurch gekennzeichnet**, daß die Umschalteinrichtung (51), die Spannungsmeßeinrichtung (41,49) und die Strommeßeinrichtung (52,43,49) synchron getaktet werden können.

8. Analysesystem nach einem der vorhergehenden Ansprüche, **dadurch gekennzeichnet**, daß zwischen die Umschalteinrichtung (51) und die Spannungsmeßeinrichtung (41,49) eine Sample und Hold-Schaltung (42) geschaltet ist.

9. Analysesystem nach einem der vorhergehenden Ansprüche, **dadurch gekennzeichnet**, daß zwischen die Umschalteinrichtung (51) und die Strommeßeinrichtung (52,43,49) eine Sample und Hold-Schaltung (44) geschaltet ist.

10. Analysesystem nach einem der vorhergehenden Ansprüche, **dadurch gekennzeichnet**, daß mindestens eine der Elektroden (13) über eine zusätzliche Verbindungsleitung (16d) mit einem zusätzlichen Elementkontakt (17d) verbunden ist.

11. Analysesystem nach Anspruch 10, **dadurch gekennzeichnet**, daß die Elektrode, an die die zusätzliche Verbindungsleitung (16d) angeschlossen ist, die Arbeitselektrode (13) ist.

12. Analysesystem nach einem der Ansprüche 10 oder 11, **dadurch gekennzeichnet**, daß der Sensor (18) eine zusätzliche Hilfselektrode (15) aufweist.

13. Analysesystem nach Anspruch 12, **dadurch gekennzeichnet**, daß die Hilfselektrode (15) und die Bezugselektrode (14) die gleiche Zusammensetzung haben.

14. Analysesystem nach einem der Ansprüche 10 bis 13, **dadurch gekennzeichnet**, daß die Arbeitselektrode (13) zwischen der Bezugselektrode (14) und der Hilfselektrode (15) angeordnet ist.

15. Analysesystem nach einem der vorhergehenden Ansprüche,
**dadurch gekennzeichnet**, daß der Analyseelementanschluß (22) einen Direktsteckverbinder (60) mit zwei Steckbereichen (62,64) aufweist, wobei
der erste Steckbereich (62) zum Anschluß des Analyseelementes (10) und der zweite Steckbereich (64) zum Anschluß an Steckkontakte (67) einer Leiterplatte (65) dient, welche mindestens einen Teil der Meß- und Auswerteschaltung (23) enthält,
die Steckbereiche (62,64) durch Kontaktfederteile (70a-70c) miteinander verbunden sind, welche jeweils außenseitige Kontaktfedern (71a-71c) in dem ersten Steckbereich (62) zum Kontaktieren der Elementkontakte (17a-17c) des Analyseelementes (10) und innenseitige Kontaktfedern (72a-72c) zum Kontaktieren der Steckkontakte (67) der Leiterplatte (65) aufweisen.

## Claims

1. Electrochemical analysis system for the analytical determination of a constituent of a sample, comprising
disposable analysis elements (10) which comprise on an isolating carrier (11) in a sample application zone (12) at least one sensor (18) with a working electrode (13) and a reference electrode (14) and in a connection zone (19) connecting contacts (17), in which the electrodes (13,14) and the connecting contacts (17) are connected via connecting leads (16) and the electrical properties of the analysis elements (10) measurable from the connecting contacts (17) vary on contact with the sample in a manner characteristic of the analysis, and
an evaluation unit (20) with an electrical voltage source (45), a current measuring device (52,49), a voltage measuring device (41,49) and an analysis element connection (22) with unit contacts (21) for the electrical connection to the connecting contacts (17) of the analysis elements, and a measuring and evaluation circuit (23) containing a changeover unit (51) for measuring the electrical variation characteristic of the analysis and converting the measured value into an analytical value,
**characterized in that**
to the changeover unit (51) on the one hand, the electrical voltage source (45) with the current measuring device (52,49) and the voltage measuring device (41,49) and, on the other hand, the unit contacts (21) of the analysis element connection (22) are connected in such a way, that the electrical voltage source (45) with the current measuring device (52,49) and the voltage measuring device (41,49) may be connected by means of the changeover unit (51) optionally to different pairs of unit contacts (21) of the analysis element connection (22), in order to enable manifold checks and verifications of the system functions related both to the unit and to the analysis element.

2. Analysis system according to claim 1, **characterized in that** the changeover unit (51) comprises a switching matrix (53).

3. Analysis system according to claim 1 or 2, **characterized in that** the changeover unit (51), the voltage measuring device (41,49) and the voltage source (45) are integrated together monolithically.

4. Analysis system according to any one of the preceding claims, **characterized in that** the voltage of the voltage source (45) and the measured signal of the current measuring device (52,43,49) can be evaluated for the determination of an electrical resistance and a discriminator device is provided for generating a fault signal if the determined electrical resistance is below and/or above a pre-determined resistance limit value.

5. Analysis system according to any one of the preceding claims, **characterized in that** the measuring and evaluation circuit (23) comprises a microprocessor-controlled digital signal processing unit, the current measuring device (52,43,49) and the voltage measuring device (41,49) generate digital output signals and the electrical voltage source (45) and the changeover unit are digitally controlled devices.

6. Analysis system according to any one of the preceding claims, **characterized in that** the voltage measuring device (41,49) and the current measuring device (52,43,49) are equipped for the determination of complex signal components.

7. Analysis system according to any one of the preceding claims, **characterized in that** the changeover unit (51), the voltage measuring device (41,49) and the current measuring device may be clocked in synchrony.

8. Analysis system according to any one of the preceding claims, **characterized in that** there is connected between the changeover unit (51) and the voltage measuring device (41,49) a sample and hold circuit (42).

9. Analysis system according to any one of the preceding claims, **characterized in that** there is connected between the changeover unit (51) and the current measuring device (52,43,49) a sample and hold circuit (44).

10. Analysis system according to any one of the preceding claims, **characterized in that** at least one of the electrodes (13) is connected via an additional connecting lead (16d) to an additional connecting contact (17d).

11. Analysis system according to claim 10, **characterized in that** the electrode to which the additional connecting lead (16d) is connected is the working electrode (13).

12. Analysis system according to any one of claims 10 or 11, **characterized in that** the sensor (18) comprises an additional auxiliary electrode (15).

13. Analysis system according to claim 12, **characterized in that** the auxiliary electrode (15) and the reference electrode (14) have the same composition.

14. Analysis system according to any one of claims 10 to 13, **characterized in that** the working electrode (13) is arranged between the reference electrode (14) and the auxiliary electrode (15).

15. Analysis system according to any one of the preceding claims,
**characterized in that** the analysis element connection (22) comprises a direct plug connector (60) with two plugging zones (62,64), in which
the first plugging zone (62) serves for the connection of the analysis element (10) and the second plugging zone (64) for the connection to plugs (67) of a printed circuit board (65), which contains at least a part of the measuring and evaluation circuit (23),
the plugging zones (62,64) are connected to one another by contact spring parts (70a-70c), which comprise respectively outside contact springs (71a-71c) in the first plugging zone (62) for the contacting of the connecting contacts (17a-17c) of the analysis element (10) and inside contact springs (72a-72c) for the contacting of the plugs (67) of the printed circuit board (65).

## Revendications

1. Système d'analyse électrochimique pour la détermination analytique d'un constituant d'un échantillon, comprenant
des éléments d'analyse perdus (10) qui, sur un support isolé (11) dans une zone d'application de l'échantillon (12), présentent au moins un détecteur (18) avec une électrode de travail (13) et une électrode de référence (14) et qui, dans une zone de raccordement (19) présentent des contacts éléments (17), et dans lequel des lignes de connexion (16) s'étendent entre les électrodes (13,14) et les contacts élément (17) et les propriétés électriques des éléments d'analyse (10) pouvant être mesurées aux contacts élément (17) varient d'une manière caractéristique de l'analyse au contact avec l'échantillon, et comprenant
une unité d'évaluation (20) dotée d'une source de tension électrique (45), d'un dispositif de mesure du courant (52,49), d'un dispositif de mesure de la tension (41,49) ainsi que d'un raccordement (22) de l'élément d'analyse doté de contacts appareil (21) pour le raccordement électrique aux contacts éléments (17) des éléments d'analyse et d'un circuit de mesure et d'évaluation (23) comprenant un dispositif de commutation (51) et servant à la mesure de la variation électrique caractéristique de l'analyse et à la transformation de la valeur mesurée en une valeur analytique,
**caractérisé en ce** que
la source électrique (45) avec le dispositif de mesure du courant (52,49) et le dispositif de mesure de la tension (41,49) d'une part et les contacts appareil (21) du raccordement (22) de l'élément d'analyse d'autre part sont raccordés au dispositif de commutation (51) de façon à ce que la source de tension électrique (45) avec le dispositif de mesure du courant (52,49) et le dispositif de mesure de la tension (41,49) puissent être raccordés au choix, par l'intermédiaire du dispositif de commutation (51), à différentes paires de contacts appareil (21) du raccordement (22) de l'élément d'analyse, afin de permettre d'effectuer de multiples contrôles et vérifications des fonctions du système concernant non seulement l'appareil, mais aussi l'élément d'analyse.

2. Système d'analyse selon la revendication 1, **caractérisé en ce** que le dispositif de commutation (51) présente une matrice de commutation (53).

3. Système d'analyse selon la revendication 1 ou 2, **caractérisé en ce** que le dispositif de commutation (51), le dispositif de mesure de la tension (41,49) et la source de tension (45) sont intégrés ensemble de façon monolithique.

4. Système d'analyse selon l'une quelconque des revendications précédentes, **caractérisé en ce** que la tension de la source de tension (45) et le signal mesuré du dispositif de mesure du courant (52,43,49) peuvent être évalués pour la détermination d'une résistance électrique, et qu'un dispositif discriminateur est prévu pour générer un signal d'erreur lorsqu'une valeur limite de résistance prédéterminée est dépassée et/ou n'est pas atteinte.

5. Système d'analyse selon l'une quelconque des revendications précédentes, **caractérisé en ce** que le circuit de mesure et d'évaluation (23) présente un dispositif de traitement de signaux numériques commandé par microprocesseur, que le dispositif de mesure du courant (52,43,49) et le dispositif de mesure de la tension (41,49) engendrent des signaux de sortie numériques et que la source de tension électrique (45) et le dispositif de commutation peuvent être commandés en numérique.

6. Système d'analyse selon l'une quelconque des revendications précédentes, **caractérisé en ce** que le dispositif de mesure de la tension (41,49) et le dispositif de mesure du courant (52,43,49) sont équipés pour la détermination de parts de signaux complexes.

7. Système d'analyse selon l'une quelconque des revendications précédentes, **caractérisé en ce** que le dispositif de commutation (51), le dispositif de mesure de la tension (41,49) et le dispositif de mesure du courant (52, 43,49) peuvent être synchronisés.

8. Système d'analyse selon l'une quelconque des revendications précédentes, **caractérisé en ce** qu'un circuit "sample" et "hold" (42) est inséré entre le dispositif de commutation (51) et le dispositif de mesure de la tension (41,49).

9. Système d'analyse selon l'une quelconque des revendications précédentes, **caractérisé en ce** qu'un circuit "sample" et "hold" (44) est inséré entre le dispositif de commutation (51) et le dispositif de mesure du courant (52, 43,49).

10. Système d'analyse selon l'une quelconque des revendications précédentes, **caractérisé en ce** qu'au moins l'une des électrodes (13) est raccordée à un contact élément (17d) supplémentaire par l'intermédiaire d'une ligne de connexion supplémentaire (16d).

11. Système d'analyse selon la revendication 10, **caractérisé en ce** que l'électrode à laquelle est raccordée la ligne de connexion supplémentaire (16d), est l'électrode de travail (13).

12. Système d'analyse selon la revendication 10 ou 11, **caractérisé en ce** que le détecteur (18) présente une électrode auxiliaire supplémentaire (15).

13. Système d'analyse selon la revendication 12, **caractérisé en ce** que l'électrode auxiliaire (15) et l'électrode de référence (14) ont la même composition.

14. Système d'analyse suivant l'une quelconque des revendications 10 à 13, **caractérisé en ce** que l'électrode de travail (13) est disposée entre l'électrode de référence (14) et l'électrode auxiliaire (15).

15. Système d'analyse selon l'une quelconque des revendications précédentes,
**caractérisé en ce** que le raccordement (22) de l'élément d'analyse présente un connecteur direct (60) doté de deux zones d'embrochage (62,64), dont la première (62) sert au raccordement de l'élément d'analyse (10) et la deuxième zone (64) au raccordement à des contacts à fiches (67) d'une plaquette à circuits imprimés (65) contenant au moins une partie du circuit de mesure et d'évaluation (23),
les zones d'embrochage (62,64) étant reliées entre elles par des parties de ressorts de contact (70a-70c) qui présentent des ressorts de contact extérieurs (71a-71c) disposés dans la première zone d'embrochage (62) et servant au contactage des contacts élément (17a-17c) de l'élément d'analyse (10) et des ressorts de contact intérieurs (72a-72c) pour le contactage des contacts à fiches (67) de la plaquette à circuits imprimés (65).
